# FASCICULE DE BREVET EUROPEEN

(11) **EP 0 991 155 B1**
(45) Date de publication et mention de la délivrance du brevet: **29.08.2007**
(21) Numéro de dépôt: 99402365.3
(22) Date de dépôt: 28.09.1999
(51) Int. Cl.: H02B 1/40, F16B 33/00

(54) **Enveloppe, en particulier coffret, à fond présentant au moins un trou obturé par un bouchon, notamment pour matériel électrique**
Gehäuse, insbesondere für elektrische Geräte, dessen Rückwand mit mindestens einem, mit einer Kappe abgedeckten, Loch versehen ist
Cabinet, especially for electrical equipment, having the rear wall with at least one hole covered with a cap

(30) Priorité: 01.10.1998 FR 9812280
(43) Date de publication de la demande: 05.04.2000
(73) Titulaire: LEGRAND FRANCE, 87000 Limoges (FR); LEGRAND SNC, 87000 Limoges (FR)
(72) Inventeur: Leneutre, Pascal, Le Mesnil Claque, 76520 Fresne le Plan (FR)
(74) Mandataire: Santarelli

(56) Documents cités:
- FR-A- 2 130 123
- FR-A- 2 186 077
- FR-A- 2 402 323
- US-A- 4 266 683
- US-A- 5 094 579

## Description

La présente invention concerne d'une manière générale les enveloppes du type de celles qui sont par exemple mises en oeuvre pour le logement et la protection d'un quelconque matériel électrique.

Une telle enveloppe comporte, globalement, un corps et une porte, le corps comportant, lui-même, quatre parois latérales et un fond.

La présente invention vise plus particulièrement, mais non nécessairement exclusivement, le cas où cette enveloppe, alors communément appelée coffret, est destinée à être rapportée sur un quelconque support, par exemple un mur.

Il est usuel, dans ce cas, de prévoir, en attente, sur le fond, au moins un trou propre au passage d'un quelconque organe de fixation, et, en pratique, il est le plus souvent prévu un tel trou dans chacune des zones d'angle du fond.

Mais, destinée au logement de matériel électrique, une telle enveloppe doit satisfaire, par elle-même, à certains critères d'étanchéité, suivant des indices spécifiés par les dispositions normatives en la matière, quel que soit son mode ultérieur de mise en oeuvre, et, en particulier, quel que soit son mode ultérieur de fixation.

Il est donc aussi usuel d'obturer systématiquement, dès l'origine, par un bouchon, tout trou que présente son fond.

A ce jour, ce bouchon est en matériau rigide, et il est donc nécessaire de procéder à sa dépose lorsque le trou correspondant doit être mis en oeuvre pour le passage d'un organe de fixation.

Il est en outre nécessaire, pour rétablir au niveau de ce trou toute l'étanchéité requise, de disposer, autour de cet organe de fixation, une rondelle d'étanchéité appropriée.

Il en résulte, globalement, à la mise en place de l'enveloppe, une complication des opérations nécessaires à cette mise en place.

La présente invention a d'une manière générale pour objet une disposition permettant au contraire de simplifier ces opérations.

De manière plus précise, elle a pour objet une enveloppe selon la revendication 1.

Grâce à la nature de son matériau, le bouchon qui équipe l'enveloppe suivant l'invention peut aisément être défoncé.

Il peut dès lors rester en place, sans qu'il soit besoin de procéder à sa dépose, lorsque le trou qu'il obture doit être mis à profit pour le passage d'un organe de fixation.

Un tel organe de fixation peut en effet très aisément être forcé à travers lui, quel que soit le sens d'engagement correspondant, c'est-à-dire que cet engagement se fasse de l'intérieur de l'enveloppe vers l'extérieur de celle-ci ou qu'il se fasse en sens inverse.

Grâce, également, à la nature de son matériau constitutif, ainsi qu'à son agencement, le bouchon qui équipe l'enveloppe suivant l'invention suffit en outre à assurer ensuite par lui-même toute l'étanchéité souhaitable autour de cet organe de fixation, sans qu'il soit besoin de prévoir spécifiquement pour ce faire une quelconque rondelle d'étanchéité particulière.

On notera que les caractéristiques du préambule de la revendication 1 étaient déjà connues du document US-A-4 266 683. Ce document enseigne de prévoir un bossage annulaire autour du trou de passage de l'organe de fixation, aussi bien du côté interne que du côté externe, le bouchon étant constitué d'une partie axiale tubulaire entièrement logée dans l'ouverture pratiquée au centre des bossages annulaires.

Les caractéristiques et avantages de l'invention ressortiront d'ailleurs de la description qui va suivre, à titre d'exemple, en référence aux dessins schématiques annexés sur lesquels :
la figure 1 est une vue en perspective d'une enveloppe suivant l'invention ;
la figure 2 en est, à échelle supérieure, une vue partielle en perspective, vue de l'arrière ;
la figure 3 est une vue en perspective éclatée reprenant celle de la figure 2 ;
la figure 4 est, à échelle différente, une vue partielle en coupe transversale de l'enveloppe suivant l'invention, suivant la ligne IV-IV de la figure 2 ;
la figure 5 est, à échelle supérieure, une vue en coupe axiale du bouchon suivant l'invention, suivant la ligne V-V de la figure 3 ;
la figure 6 est une vue partielle en coupe transversale qui, déduite de celle de la figure 4, illustre un premier mode de fixation de l'enveloppe suivant l'invention ;
la figure 7 est une vue partielle en coupe transversale analogue à celle de la figure 6, pour un deuxième mode de fixation de cette enveloppe ;
la figure 8 est une vue en coupe axiale analogue à celle de la figure 5, pour une autre forme de réalisation du bouchon suivant l'invention.

Tel qu'illustré sur ces figures, il s'agit, globalement, de l'équipement d'une enveloppe 10 comportant un corps 11 et une porte 12, le corps 11 comportant, lui-même, quatre parois latérales 13 et un fond 14.

Une telle enveloppe 10 ne relevant pas, par elle-même, de la présente invention, elle ne sera pas décrite dans tous ses détails ici.

Seuls en seront décrits les éléments nécessaires à la compréhension de l'invention.

Il suffira, à cet égard, d'indiquer que, dans la forme de réalisation représenté, les parois latérales 13 du corps 11 appartiennent conjointement à une ceinture 15, et que le fond 14, distinct de cette ceinture 15, est rapporté sur celle-ci à la faveur d'un cadre d'appui 16 formé par un retour 17 des parois latérales 13.

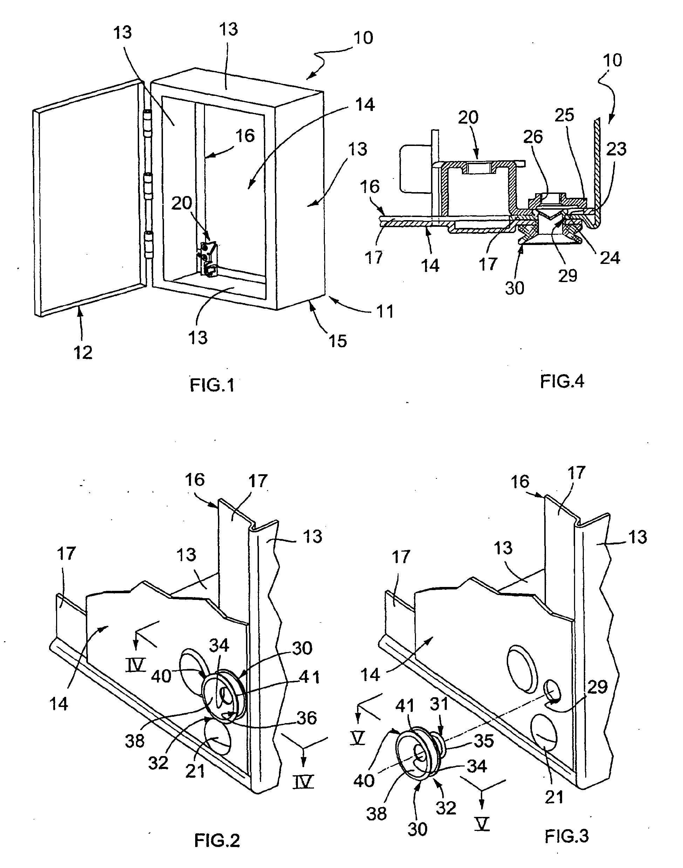

En outre, dans la forme de réalisation représentée, l'enveloppe 10 comporte, intérieurement, dans chacune des zones d'angle du fond 14, une pièce de coin 20, dont une vis 21 assure de l'arrière la fixation, figures 2 et 3, et qui, outre divers autres éléments, comporte, en regard d'un flasque 23 plaqué contre le cadre d'appui 16 et évidé par un ajour 24, une patte 25, qui, initialement repliée en U contre le flasque 23, est susceptible d'être redressée pour libérer l'ajour 24 de celui-ci, et qui présente, elle-même, au droit de cet ajour 24, un perçage taraudé 26, figure 4.

De manière connue en soi, il est prévu, en attente, sur le fond 14, pour le passage éventuel d'un quelconque organe de fixation 28, 28', au moins un trou 29, figure 3, et, pour assurer à ce niveau toute l'étanchéité requise, ce trou 29 est normalement obturé, dès l'origine, c'est-à-dire en atelier, par un bouchon 30.

En pratique, il est prévu en attente un trou 29, obturé par un bouchon 30, dans chacune des zones d'angle du fond 14, et ce trou 29 s'étend en correspondance avec l'ajour 24 du flasque 23 de la pièce de coin 20 correspondante, qui est lui-même en correspondance avec le perçage taraudé 26 de la patte 25 de cette pièce de coin 20 initialement présente en avant de ce flasque 23.

Suivant l'invention, pour l'un au moins des trous 29, et, en pratique, pour chacun de ceux-ci, le bouchon 30 est en matériau élastiquement déformable, et, donc, souple.

Par exemple, ce matériau est un élastomère thermoplastique du type de celui vendu sous le désignation commerciale EPDM.

Dans les deux formes de réalisation représentées, le bouchon 30 suivant l'invention comporte, globalement, une partie axiale 31, qui est globalement tubulaire, et par laquelle il est engagé dans le trou 29 du fond 14, une partie radiale 32, qui formant garde, s'étend à l'une des extrémités de la partie axiale 31, et par laquelle il est appliqué au fond 14, sur la surface externe de celui-ci, et un voile 33, qui occulte le passage 34 formé par la partie axiale 31.

En outre, dans ces deux formes de réalisation représentées, la partie axiale 31 forme, extérieurement, en saillie, à son extrémité opposée à la partie radiale 32, un bourrelet d'encliquetage 35.

Dans les deux formes de réalisation représentées, enfin, !e voile 33 intervient à la faveur de la partie axiale 31, et, suivant des dispositions décrites plus en détail ultérieurement, dans sa portion périphérique, au moins, ce voile 33 est globalement concave, avec une concavité tournée du côté opposé à la partie radiale 32.

Suivant l'invention, la partie radiale 32 du bouchon 30 suivant l'invention est axialement compressible.

Dans les deux formes de réalisation représentées, cette partie radiale 32 forme, en creux, pour ce faire, autour du passage 34 de la partie axiale 31, sur sa face frontale 36 opposée à cette partie axiale 31, une surface évasée 38, qui est centrée sur l'axe A de l'ensemble.

Par exemple, et tel que représenté, cette surface évasée 38 est globalement tronconique.

Dans la forme de réalisation plus particulièrement représentée sur les figures 1 à 7, cette surface évasée 38 de la partie radiale 32 du bouchon 30 suivant l'invention s'étend jusqu'à proximité immédiate de la périphérie de sa face frontale 36.

Autrement dit, elle occupe la quasi totalité de cette face frontale 36.

Corollairement, dans cette forme de réalisation, la partie radiale 32 présente, extérieurement, sur sa tranche 40, une gorge 41, qui s'étend annulairement autour de l'axe A de l'ensemble.

Par exemple, et tel que représenté, cette gorge 41 a, en section axiale, un profil triangulaire, et celui-ci est symétrique par rapport à un plan transversal, qui, passant par son fond, est perpendiculaire à l'axe A de l'ensemble.

En outre, dans la forme de réalisation représentée, celui des flancs de cette gorge 41 qui est le plus proche de la surface évasée 38 s'étend sensiblement parallèlement à celle-ci.

Par exemple, et tel que représenté, la profondeur P de cette gorge 41 est inférieure à la moitié de la largeur L de la partie radiale 32 mesurée radialement à compter de la surface extérieure de la partie axiale 31, en étant en pratique comprise entre le quart et la moitié de cette largeur L.

Par ailleurs, dans la forme de réalisation représentée sur les figures 1 à 7, la partie radiale 32 du bouchon 30 suivant l'invention forme, extérieurement, à son raccordement avec la partie axiale 31, une surface plane 42, qui s'étend sensiblement perpendiculairement à l'axe A de l'ensemble.

Soit D la distance séparant de cette surface plane 42 le bourrelet d'encliquetage 35.

En pratique, cette distance D est faite suffisante pour correspondre à deux épaisseurs de paroi, celle du fond 14 et celle du cadre d'appui 16, le bourrelet d'encliquetage 35 devant venir se prendre au-delà de ce dernier.

Dans la forme de réalisation représentée sur les figures 1 à 7, le bourrelet d'encliquetage 35 a, en section axiale, un profil arrondi, et, plus précisément, un profil en demi-cercle.

En outre, dans cette forme de réalisation, le voile 33 intervient à l'extrémité de la partie axiale 31 opposée à la partie radiale 32, en s'enracinant dans la partie axiale 31 au niveau de ce bourrelet d'encliquetage 35.

Enfin, dans cette forme de réalisation, le voile 33 est continûment concave, de sa portion périphérique à sa portion centrale.

Par exemple, et tel que représenté, il est globalement conique.

Comme déjà indiqué ci-dessus, l'enveloppe 10 suivant l'invention est équipée dès l'origine d'un bouchon 30 dans chacun des trous 29 de son fond 14 ce qui garantit son étanchéité.

En pratique, d'un trou 29 à l'autre, les bouchons 30 sont identiques.

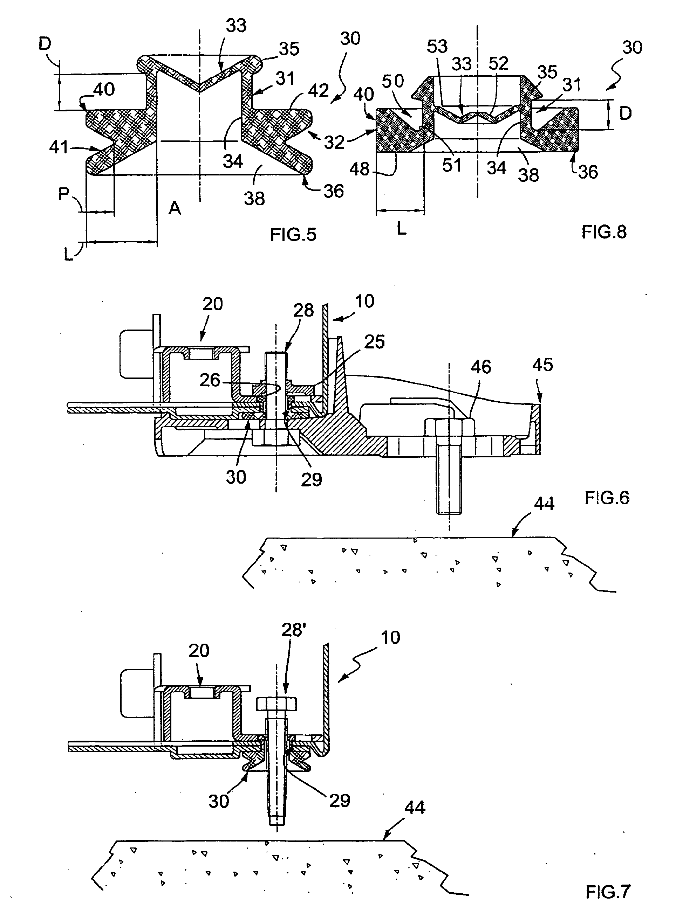

Si, ultérieurement, l'enveloppe 10 doit être rapportée sur un quelconque support, et par exemple sur un mur 44, comme représenté sur les figures 6 et 7, il peut notamment être procédé suivant l'un ou l'autre des deux modes de fixation suivants.

Par exemple, figure 6, suivant un premier de ces modes de fixation, l'enveloppe 10 est rapportée sur le mur 44 par l'intermédiaire de pattes 45, à raison d'une patte 45 pour chacune des zones d'angle de son fond 14.

Dans un tel cas, chacune des pattes 45 est d'abord rapportée sur l'enveloppe 10 par un organe de fixation 28, qui intervient de l'arrière, à la faveur du trou 29 correspondant du fond 14, et qui, en pratique, est une vis destinée à venir en prise avec le percage taraudé 26 de la patte 25 de la pièce de coin 20 correspondante.

L'enveloppe 10 ainsi équipée de pattes 45 est ensuite rapportée sur le mur 44, par des vis ou tirefonds 46 intervenant à la faveur de ces pattes 45.

En variante, figure 7, suivant un deuxième mode de fixation possible, l'enveloppe 10 est directement rapportée sur le mur 44, par des organes de fixation 28', qui interviennent de l'avant, à la faveur des trous 29 du fond 14, à raison d'un pour chacun de ces trous 29, après l'effacement de la patte 25 de la pièce de coin 20 correspondante, et qui, en pratique, sont des vis ou des tirefonds.

Dans l'un et l'autre cas, pour chacun des trous 29 du fond 14, le bouchon 30 suivant l'invention est laissé en place, et il est simplement traversé, à force, par l'organe de fixation 28, 28' correspondant.

Comme représenté sur la figure 6 pour le mode de fixation faisant appel à des pattes 45, la partie radiale 32 de ce bouchon 30 se trouve, en outre, dans l'un et l'autre cas, fortement compressée, au bénéfice de l'étanchéité entre le trou 29 correspondant et l'organe de fixation 28, 28' mis en oeuvre.

Ainsi qu'il est aisé de le comprendre, la compressibilité de cette partie radiale 32 du bouchon 30 suivant l'invention est due, non seulement à la nature de son matériau constitutif, mais encore à sa structure.

A titre illustratif, mais sans qu'il puisse en résulter une quelconque limitation pour l'invention, il sera indiqué, ici, que de bons résultats ont été obtenus à ce sujet avec, pour la surface évasée 38 de cette partie radiale 32 un angle d'ouverture compris entre 100° et 140°, et, par exemple, voisin de 120°, et, pour la gorge 41 de cette partie radiale 32, un angle d'ouverture compris entre 30° et 90°, et, par exemple, voisin de 60°.

Suivant la forme de réalisation représentée sur la figure 8, la partie radiale 32 du bouchon 30 suivant l'invention forme, autour de la surface évasée 38 de sa face frontale 36 opposée à la partie axiale 31, une surface plane 48, qui s'étend sensiblement perpendiculairement à l'axe A de l'ensemble.

Par exemple, et tel que représenté, cette surface plane 48 s'étend sur plus de la moitié de la largeur L de la partie radiale 32 à compter de la périphérie de celle-ci.

En outre, dans cette forme de réalisation, la partie radiale 32 est dépourvue de gorge sur sa tranche 40, mais elle forme, extérieurement, à son raccordement avec la partie axiale 31, une gorge 50, qui s'étend annulairement autour de l'axe A de l'ensemble.

Dans la forme de réalisation représentée, celui des flancs de cette gorge 50 qui est radialement le plus interne est cylindrique, et, en pratique, il est formé par la surface extérieure de la partie axiale 31.

Corollairement, celui des flancs de cette gorge 50 qui est radialement le plus externe est globalement tronconique.

En pratique, la distance D séparant du fond 51 de cette gorge 50 le bourrelet d'encliquetage 35 est faite suffisante pour correspondre, comme précédemment, à deux épaisseurs de paroi.

Dans la forme de réalisation représentée, le bourrelet d'encliquetage 35 a, en section axiale, un profil triangulaire, et celui de ses flancs qui est le plus éloigné de la partie radiale 32 est moins raide que l'autre de ceux-ci.

Dans la forme de réalisation représentée, le voile 33 intervient par ailleurs entre les deux extrémités de la partie axiale 31, sensiblement à mi-hauteur dans le passage 34 formé par celle-ci.

En outre, dans cette forme de réalisation, ce voile 33 comporte une portion centrale 52, qui est elle aussi globalement concave, mais dont la concavité est tournée du côté de la partie radiale 32.

Ainsi, dans cette forme de réalisation, le voile 33 comporte, annulairement, deux portions distinctes, à savoir, une portion périphérique 53, dont la concavité est, comme précédemment, tournée du côté opposé à la partie radiale 32, et une portion centrale 52, dont la concavité est inverse de celle de la portion périphérique 53.

Ainsi qu'il est aisée de le comprendre, la compressibilité de la partie radiale 32 du bouchon 30 dans cette forme de réalisation représentée sur la figure 8 résulte, comme précédemment, de la nature du matériau constitutif de ce bouchon 30 et de sa structure.

Mais, eu égard à la gorge 50, la partie radiale 32 est en quelque sorte en retournement par rapport à la partie axiale 31, suivant une configuration générale en U, au bénéfice d'une compacité accrue pour l'ensemble.

En outre, et surtout, le bouchon 30 suivant l'invention peut ainsi avantageusement s'adapter à des épaisseurs de paroi différentes, une partie non négligeable, sinon la partie la plus importante, de la compressibilité de sa partie radiale 32 étant assurée par la portion de cette partie radiale 32 qui s'étend entre le fond 51 de la gorge 50 et le bourrelet d'encliquetage 35 de la partie axiale 31.

A titre illustratif, mais sans qu'il puisse en résulter une quelconque limitation de l'invention, il sera indiqué, à ce sujet, que des résultats satisfaisants ont été obtenus avec, pour l'angle d'ouverture du flanc de la gorge 50 radialement le plus externe, une valeur comprise entre 80° et 120°, en étant par exemple voisine de 100°.

Bien entendu, la présente invention ne se limite pas aux deux formes de réalisation représentées, mais englobe toute variante d'exécution et/ou de combinaison de leurs divers éléments.

## Revendications

1. Enveloppe du genre comportant un corps (11) et une porte (12), le corps (11) comportant, lui-même, quatre parois latérales (13) et un fond (14), avec, en attente, sur ce fond (14), pour le passage éventuel d'un quelconque organe de fixation (28, 28'), au moins un trou (29) obturé par un bouchon (30) en matériau élastiquement déformable, ledit bouchon (30) comportant une partie axiale (31), qui est tubulaire, et par laquelle il est engagé dans le trou (29) du fond (14), et un voile (33), qui occulte le passage (34) formé par la partie axiale (31), **caractérisée en ce que** le bouchon (30) comporte une partie radiale (32), qui, formant garde, s'étend à l'une des extrémités de la partie axiale (31), et par laquelle il est appliqué au fond (14), sur la surface externe de celui-ci.

2. Enveloppe suivant la revendication 1, **caractérisée en ce que** la partie radiale (32) est axialement compressible.

3. Enveloppe suivant la revendication 2, **caractérisée en ce que** la partie radiale (32) du bouchon (30) forme, en creux, autour du passage (34) de la partie axiale (31), sur sa face frontale (36) opposée à cette partie axiale (31), une surface évasée (38) qui est centrée sur l'axe (A) de l'ensemble.

4. Enveloppe suivant la revendication 3, **caractérisée en ce que** la surface évasée (38) de la partie radiale (32) s'étend jusqu'à proximité immédiate de la périphérie de sa face frontale (36).

5. Enveloppe suivant la revendication 3, **caractérisée en ce que** la partie radiale (32) forme, autour de la surface évasée (38) de sa face frontale (36), une surface plane (48), qui s'étend sensiblement perpendiculairement à l'axe (A) de l'ensemble.

6. Enveloppe suivant l'une quelconque des revendications 1 à 5, **caractérisée en ce que** la partie radiale (32) présente, extérieurement, sur sa tranche (40), une gorge (41), qui s'étend annulairement autour de l'axe (A) de l'ensemble.

7. Enveloppe suivant la revendication 6, **caractérisée en ce que** la partie radiale (32) forme, extérieurement, à son raccordement avec la partie axiale (31), une surface plane (42), qui s'étend sensiblement perpendiculairement à l'axe (A) de l'ensemble.

8. Enveloppe suivant l'une quelconque des revendications 1 à 5, **caractérisée en ce que** la partie radiale (32) forme, extérieurement, à son raccordement avec la partie axiale (31), une gorge (50), qui s'étend annulairement autour de l'axe (A) de l'ensemble.

9. Enveloppe suivant la revendication 8, **caractérisée en ce que** celui des flancs de la gorge (50) qui est radialement le plus interne est cylindrique, et celui qui est radialement le plus externe est globalement tronconique.

10. Enveloppe suivant la revendication 9, **caractérisée en ce que** le flanc radialement le plus interne de la gorge (50) est formé par la surface extérieure de la partie axiale (31).

11. Enveloppe suivant l'une quelconque des revendications 1 à 10, **caractérisée en ce que** la partie axiale (31) forme, extérieurement, en saillie, à son extrémité opposée à la partie radiale (32), un bourrelet d'encliquetage (35), la partie radiale saillant au-delà du bourrelet d'encliquetage (35).

12. Enveloppe suivant l'une quelconque des revendications 1 à 11, **caractérisée en ce que** le voile (33) intervient à la faveur de la partie axiale (31).

13. Enveloppe suivant la revendication 12, **caractérisée en ce que** le voile (33) intervient à l'extrémité de la partie axiale (31) opposée à la partie radiale (32).

14. Enveloppe suivant la revendication 12, **caractérisée en ce que** le voile (33) intervient entre les deux extrémités de la partie axiale (31).

15. Enveloppe suivant l'une quelconque des revendications 12 à 14, **caractérisée en ce que**, dans sa portion périphérique, au moins, le voile (33) est globalement concave, avec une concavité tournée du côté opposé à la partie radiale (32).

16. Enveloppe suivant la revendication 15, **caractérisée en ce que** le voile (33) comporte une portion centrale (52), qui est elle aussi globalement concave, mais dont la concavité est tournée du côté de la partie radiale (32).

## Claims

1. An enclosure comprising a body (11) and a door (12), the body (11) comprising four side walls (13) and a back (14), with, for the possible passage of any kind of fixing member (28, 28'), at least one hole (29)in the back (14) blocked by a plug (30) which is made from an elastically deformable material, said plug (30) having a tubular axial part (31) engaged in the hole (29) of the back (14), and a web (33) which blocks the passage (34) formed by the axial part (31), **characterised in that** the plug (30) includes a radial guard part (32) at one end of the axial part (31) and pressed against the external surface of the back (14).

2. An enclosure according to claim 1, **characterised in that** the radial part (32) is axially compressible.

3. An enclosure according to claim 2, **characterised in that** the radial part (32) of the plug (30) forms a recessed tapered surface (38) centred on the axis (A) of the assembly around the passage (34) in the axial part (31) on its front face (36) facing away from the axial part (31).

4. An enclosure according to claim 3, **characterized in that** the tapered surface (38) of the radial part (32) extends as far as the immediate vicinity of the periphery of its front face (36).

5. An enclosure according to claim 3, **characterised in that** the radial part (32) forms a plane surface (48) substantially perpendicular to the axis (A) of the assembly around the tapered surface (38) of its front face (36).

6. An enclosure according to any of claims 1 to 5, **characterised in that** the radial part (32) has a groove (41) on the outside of its edge (40) and extending annularly around the axis (A) of the assembly.

7. An enclosure according to claim 6, **characterised in that** the radial part (32) forms a plane external surface (42) substantially perpendicular to the axis (A) of the assembly where it joins onto the axial part (31).

8. An enclosure according to any of claims 1 to 5, **characterised in that** the radial part (32) forms an external groove (50) extending annularly around the axis (A) of the assembly where it joins onto the axial part (31).

9. An enclosure according to claim 8, **characterised in that** the radially innermost flank of the groove (50) is cylindrical and the radially outermost flank is generally frustoconical.

10. An enclosure according to claim 9, **characterised in that** the radially innermost flank of the groove (50) is formed by the outside surface of the axial part (31).

11. An enclosure according to any one of claims 1 to 10, **characterised in that** the axial part (31) forms a snap-fastener bead (35) projecting outwards at the end opposite the radial part (32), the radial part projecting beyond the snap-fastener bead (35).

12. An enclosure according to any one of claims 1 to 11, **characterised in that** the web (33) is in the axial part (31).

13. An enclosure according to claim 12, **characterised in that** the web (33) is at the end of the axial part (31) opposite the radial part (32).

14. An enclosure according to claim 12, **characterised in that** the web (33) is between the two ends of the axial part (31).

15. An enclosure according to any one of claims 12 to 14, **characterised in that** at least the peripheral portion of the web (33) is generally concave with its concave side facing away from the radial part (32).

16. An enclosure according to claim 15, **characterised in that** the web (33) has a central portion (52) which is also generally concave but whose concave side faces towards the radial part (32).

## Patentansprüche

1. Gehäuse mit einem Korpus (11) und einer Tür (12), wobei der Korpus (11) selbst vier Seitenwände (13) und einen Boden (14) aufweist, mit wenigstens einem am Boden (14) bereits vorhandenen, durch einen Stöpsel (30) aus elastisch verformbarem Material verschlossenen Loch (29) zum eventuellen Hindurchführen eines beliebigen Befestigungsorgans (28, 28'), wobei der Stöpsel (30) einen axialen Teil (31), der rohrförmig ist und mit dem dieser in das Loch (29) des Bodens (14) eingeführt wird, und eine Hülle (33) umfasst, die den durch den axialen Teil (31) gebildeten Durchgang abdeckt,
**dadurch gekennzeichnet, dass** der Stöpsel (30) einen radialen Teil (32) aufweist, der sich, eine Sperre bildend, an einem der Enden des axialen Teils (31) erstreckt und durch den dieser an den Boden (14) an dessen Außenseite gedrückt wird.

2. Gehäuse nach Anspruch 1,
**dadurch gekennzeichnet, dass** der radiale Teil (32) axial komprimlerbar Ist.

3. Gehäuse nach Anspruch 2,
**dadurch gekennzeichnet, dass** der radiale Teil (32) des Stöpsels (30) auf seiner dem axialen Teil (31) entgegengesetzten Stirnseite (36) um den Durchgang (34) des axialen Teils (31) herum vertieft eine konisch erweiterte Fläche (38) bildet, die auf die Achse (A) des Ganzen zentriert Ist.

4. Gehäuse nach Anspruch 3,
**dadurch gekennzeichnet, dass** sich die konisch erweiterte Fläche (38) des radialen Teils (32) bis In unmittelbare Nähe des Rands seiner Stirnseite (36) erstreckt.

5. Gehäuse nach Anspruch 3,
**dadurch gekennzeichnet, dass** der radiale Teil (32) um die konisch erweiterte Fläche (38) seiner Stirnseite (36) herum eine ebene Fläche (48) bildet, die sich im Wesentlichen lotrecht zur Achse (A) des Ganzen erstreckt.

6. Gehäuse nach einem der Ansprüche 1 bis 5,
**dadurch gekennzeichnet, dass** der radiale Teil (32) außen auf seinem Teilstück (40) eine Nut (41) aufweist, die um die Achse (A) des Ganzen herum ringförmig verläuft.

7. Gehäuse nach Anspruch 6,
**dadurch gekennzeichnet, dass** der radiale Teil (32) außen an der Verbindung zu dem axialen Teil (31) eine ebene Fläche (42) aufweist, die sich Im Wesentlichen lotrecht zur Achse (A) des Ganzen erstreckt,

8. Gehäuse nach einem der Ansprüche 1 bis 5,
**dadurch gekennzeichnet, dass** der radiale Teil (32) außen an der Verbindung zu dem axialen Teil (31) eine Nut (50) bildet, die um die Achse (A) des Ganzen herum ringförmig verläuft.

9. Gehäuse nach Anspruch 8,
**dadurch gekennzeichnet, dass** von den Seltenwänden der Nut (50) diejenige, die radial am weitesten innen liegt, zyllnderförmig Ist, und diejenige, die radial am weitesten außen liegt, allgemein kegelstumpfförmig Ist.

10. Gehäuse nach Anspruch 9,
**dadurch gekennzeichnet, dass** die radial am weltesten innen gelegene Seitenwand der Nut (50) durch die Außenseite des axialen Teils (31) gebildet Ist.

11. Gehäuse nach einem der Ansprüche 1 bis 10,
**dadurch gekennzeichnet, dass** der axiale Teil (31) an seinem dem radialen Teil (32) entgegengesetzten Ende außen vorstehend eine Rastwulst (35) bildet, wobei der radiale Teil über die Rastwulst (35) hinausragt.

12. Gehäuse nach einem der Ansprüche 1 bis 11,
**dadurch gekennzeichnet, dass** die Hülle (33) mit Hilfe des axialen Teils (31) wirkt.

13. Gehäuse nach Anspruch 12,
**dadurch gekennzeichnet, dass** die Hülle (33) an dem dem radialen Teil (32) entgegengesetzten Ende des axialen Teils (31) wirkt.

14. Gehäuse nach Anspruch 12,
**dadurch gekennzeichnet, dass** die Hülle (33) zwischen den beiden Enden des axialen Teils (31) wirkt.

15. Gehäuse nach einem der Ansprüche 12 bis 14,
**dadurch gekennzeichnet, dass** die Hülle (33) wenigstens In Ihrem Randstück allgemein konkav ist, wobei die Konkavität zu der dem radialen Teil (32) entgegengesetzten Seite gerichtet ist,

16. Gehäuse nach Anspruch 15,
**dadurch gekennzeichnet, dass** die Hülle (33) ein Mittelstück (52) aufweist, das seinerseits allgemein konkav ist, wobei die Konkavität jedoch zu dem radialen Teil (32) hin gerichtet ist.
